# EUROPEAN PATENT APPLICATION

(11) **EP 4 231 085 A1**
(43) Date of publication of application: **23.08.2023**
(21) Application number: 21882644.4
(22) Date of filing: 11.10.2021
(51) Int. Cl.: G02B 30/56, G02B 5/04

(54) **AERIAL DISPLAY DEVICE**

(30) Priority: 19.10.2020 JP 2020175304
(71) Applicant: TOPPAN INC., Tokyo 110-0016 (JP)
(72) Inventor: DAIKU, Yasuhiro, Tokyo 110-0016 (JP)
(74) Representative: TBK
(86) International application number: PCT/JP2021/037571
(87) International publication number: WO 2022/085503

(57) **Abstract**

An aerial display apparatus includes: a display device (11) displaying an image; and a prism device (12) reflecting light from the display device (11) and causing an image to be displayed in an aerial space on a side opposite to the display device (11). The prism device (12) includes a plurality of prism elements (20) arranged in a horizontal plane. Each of the prism elements (20) is formed of a hexahedron and includes a first and a second refraction surfaces refracting light and a first and a second reflection surfaces reflecting light. The first refraction surface corresponds to a bottom surface of the hexahedron and is inclined with respect to a first direction parallel with the horizontal plane. The second refraction surface corresponds to a top surface of the hexahedron and is inclined with respect to the first direction.

## Description

### FIELD

The present invention relates generally to an aerial display apparatus displaying an image in the air.

### BACKGROUND

An aerial display apparatus capable of displaying an image and/or a moving image as an aerial image has been studied and is expected to be a new human-machine interface. The aerial display apparatus reflects light emitted from a display surface of a display device and displays an image, etc. in the air using, for example, a dihedral corner reflector array in which dihedral corner reflectors are arranged in an array. In the display method using the dihedral corner reflector array, aberration does not occur, and an image, etc. is displayed at a plane-symmetrical position.

### CITATION LIST

### PATENT LITERATURE

Patent Document 1: Jpn. Pat. Appln. KOKAI Publication No. 2017-67933

### SUMMARY

### TECHNICAL PROBLEM

The present invention provides an aerial display apparatus enabling downsizing.

### SOLUTION TO PROBLEM

A first aspect of the present invention provides an aerial display apparatus comprising: a display device displaying an image; and a prism device reflecting light from the display device and causing an image to be displayed in an aerial space on a side opposite to the display device, wherein the prism device includes a plurality of prism elements arranged in a horizontal plane, each of the prism elements is formed of a hexahedron and includes a first and a second refraction surfaces refracting light and a first and a second reflection surfaces reflecting light, the first refraction surface corresponds to a bottom surface of the hexahedron and is inclined with respect to a first direction parallel with the horizontal plane, the second refraction surface corresponds to a top surface of the hexahedron and is inclined with respect to the first direction, the first reflection surface corresponds to a side surface of the hexahedron and is parallel with a normal direction, and the second reflection surface corresponds to another side surface of the hexahedron, contacts with the first reflection surface, and is parallel with the normal direction.

A second aspect of the present invention provides the aerial display apparatus according to the first aspect, wherein the first refraction surface is inclined by 45° with respect to the first direction, and the second refraction surface is inclined by 45° with respect to the first direction.

A third aspect of the present invention provides the aerial display apparatus according to the first aspect, wherein in plan view, the first reflection surface is inclined with respect to the first direction, and in plan view, the second reflection surface is inclined with respect to the first direction.

A fourth aspect of the present invention provides the aerial display apparatus according to the third aspect, wherein the first reflection surface is inclined by 45° with respect to the first direction, and the second reflection surface is inclined by 45° with respect to the first direction.

A fifth aspect of the present invention provides the aerial display apparatus according to the first aspect, wherein the first reflection surface and the second reflection surface are arranged to be orthogonal to each other.

A sixth aspect of the present invention provides the aerial display apparatus according to the first aspect, wherein the prism device is formed of a transparent material.

A seventh aspect of the present invention provides the aerial display apparatus according to the first aspect, further comprising: a lighting device emitting light, wherein the display device is a liquid crystal display device and transmits light from the lighting device.

An eighth aspect of the present invention provides an aerial display apparatus comprising: a display device displaying an image; and a prism device reflecting light from the display device and causing an image to be displayed in an aerial space on a side opposite to the display device, wherein the prism device includes: a substrate; a plurality of prism elements provided on a bottom surface of the substrate and arranged in a horizontal plane; and a plurality of refraction members provided on a top surface of the substrate and refracting light, each of the prism elements is formed of a hexahedron and includes a refraction surface refracting light and a first and a second reflection surfaces reflecting light, the refraction surface corresponds to a bottom surface of the hexahedron and is inclined with respect to a first direction parallel with the horizontal plane, the first reflection surface corresponds to a side surface of the hexahedron and is parallel with a normal direction, the second reflection surface corresponds to another side surface of the hexahedron, contacts with the first reflection surface, and is parallel with the normal direction, and the refraction members are arranged side by side in the first direction, each of the refraction members extends in a second direction orthogonal to the first direction in the horizontal plane, and each of the refraction members is formed of a triangular pole.

A ninth aspect of the present invention provides the aerial display apparatus according to the eighth aspect, wherein the refraction surface is inclined by 45° with respect to the first direction.

A tenth aspect of the present invention provides the aerial display apparatus according to the eighth aspect, wherein each of the refraction members includes a refraction surface inclined by 45° with respect to the first direction.

An eleventh aspect of the present invention provides the aerial display apparatus according to the eighth aspect, wherein in plan view, the first reflection surface is inclined with respect to the first direction, and in plan view, the second reflection surface is inclined with respect to the first direction.

A twelfth aspect of the present invention provides the aerial display apparatus according to the eleventh aspect, wherein the first reflection surface is inclined by 45° with respect to the first direction, and the second reflection surface is inclined by 45° with respect to the first direction.

A thirteenth aspect of the present invention provides the aerial display apparatus according to the eighth aspect, wherein the first reflection surface and the second reflection surface are arranged to be orthogonal to each other.

A fourteenth aspect of the present invention provides the aerial display apparatus according to the eighth aspect, wherein the prism device is formed of a transparent material.

A fifteenth aspect of the present invention provides the aerial display apparatus according to the eighth aspect, further comprising: a lighting device emitting light, wherein the display device is a liquid crystal display device and transmits light from the lighting device.

### ADVANTAGEOUS EFFECTS OF INVENTION

The present invention provides an aerial display apparatus enabling downsizing.

### BRIEF DESCRIPTION OF THE DRAWINGS

FIG. 1 is a perspective view of an aerial display apparatus according to an embodiment.
FIG. 2A is a perspective view of a prism device.
FIG. 2B is a plan view of a region of part of the prism device.
FIG. 2C is a side view of the prism device.
FIG. 3A is a perspective view of a prism element.
FIG. 3B is a plan view of the prism element.
FIG. 3C is a side view of the prism element.
FIG. 4 is a block diagram of the aerial display apparatus.
FIG. 5 is a schematic diagram illustrating an operation of the aerial display apparatus.
FIG. 6A is a schematic diagram illustrating an operation of the prism element.
FIG. 6B is a schematic diagram illustrating an operation of the prism element.
FIG. 6C is a schematic diagram illustrating an operation of the prism element.
FIG. 7A is a perspective view of a prism device according to a first example.
FIG. 7B is a side view of the prism device according to the first example.
FIG. 7C is a bottom view of a region of part of the prism device according to the first example.
FIG. 8A is a perspective view of a prism device according to a second example.
FIG. 8B is a side view of the prism device according to the second example.
FIG. 9 is a diagram illustrating a method for manufacturing the prism device according to the second example.

### DETAILED DESCRIPTION

Hereinafter, embodiments will be described with reference to the drawings. The drawings are schematic or conceptual, and the dimensions, ratios, and the like of each drawing are not necessarily the same as the actual ones. Portions that represent the same component in different drawings may be shown in different dimensional relationships and/or ratios. In particular, several embodiments shown below exemplify an apparatus and a method for embodying the technical idea of the present invention, and the technical idea of the present invention is not specified by the shape, structure, disposition, or the like of the components. In the following description, elements having the same function and configuration will be denoted by the same reference numerals, and redundant descriptions will be omitted.

### <1> Structure of Aerial Display Apparatus 1

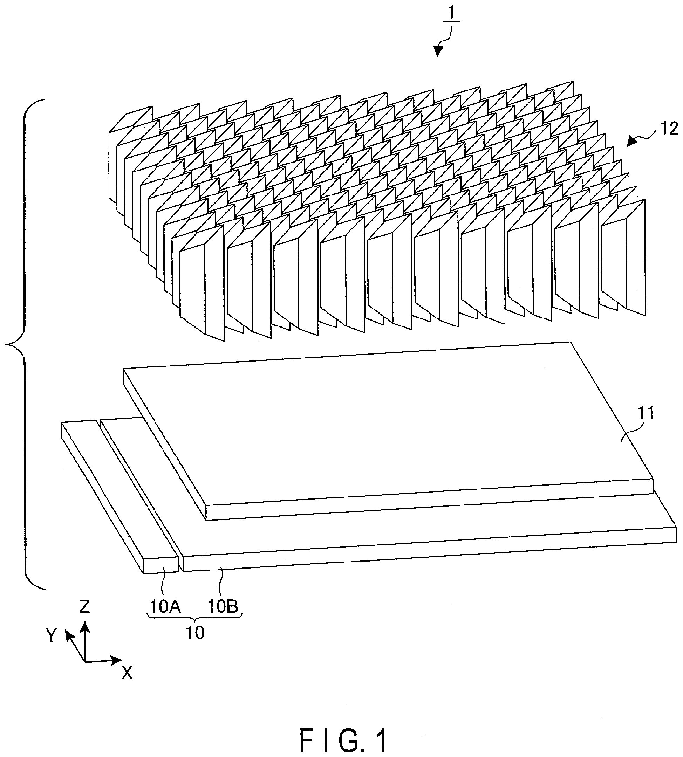

FIG. 1 is a perspective view of an aerial display apparatus 1 according to an embodiment. An X direction in FIG. 1 is a direction extending along a side of the aerial display apparatus 1, a Y direction is a direction orthogonal to the X direction in a horizontal plane, and a Z direction is a direction (also referred to as "normal direction") orthogonal to the XY plane.

The aerial display apparatus 1 includes a lighting device 10, a display device 11, and a prism device 12. The lighting device 10, the display device 11, and the prism device 12 are arranged in this order along the Z direction, and arranged in such a manner that their principal surfaces are parallel. FIG. 1 illustrates a plurality of devices forming the aerial display apparatus 1 in a floating manner, but the devices (lighting device 10, display device 11, and prism device 12) are fixed in positions in the drawing with supporting members (not illustrated).

The lighting device 10 produces illumination light and emits the illumination light toward the display device 11. The lighting device 10 is formed of a surface light source. The lighting device 10 is formed of, for example, a side-light type (edge-light type) backlight. The lighting device 10 includes a light source unit 10A and a light guide plate 10B. The light source unit 10A is disposed on a side surface of the light guide plate 10B, and emits illumination light toward a side surface of the light guide plate 10B. The light guide plate 10B emits illumination light from the light source unit 10A toward the display device 11. The light source unit 10A includes, for example, a plurality of light-emitting diodes (LEDs) that emit white light.

The display device 11 is a transmissive display device. The display device 11 is formed of, for example, a liquid crystal display device. A driving mode of the display device 11 is not particularly limited, and a twisted nematic (TN) mode, a vertical alignment (VA) mode, a homogeneous mode, or the like can be used. The display device 11 receives illumination light emitted from the lighting device 10. The display device 11 allows illumination light to be transmitted therethrough, and performs light modulation. The display device 11 displays a desired image and/or a moving image on its display surface.

The prism device 12 receives display light transmitted through the display device 11. The prism device 12 refracts and reflects the display light to cause an aerial image to be displayed in an aerial space on a side opposite to the display device 11. The display light reflected by the prism device 12 is visually recognized by a viewer who is on the side of the prism device 12 opposite to the display device 11.

### <2> Specific Structure of Prism Device 12

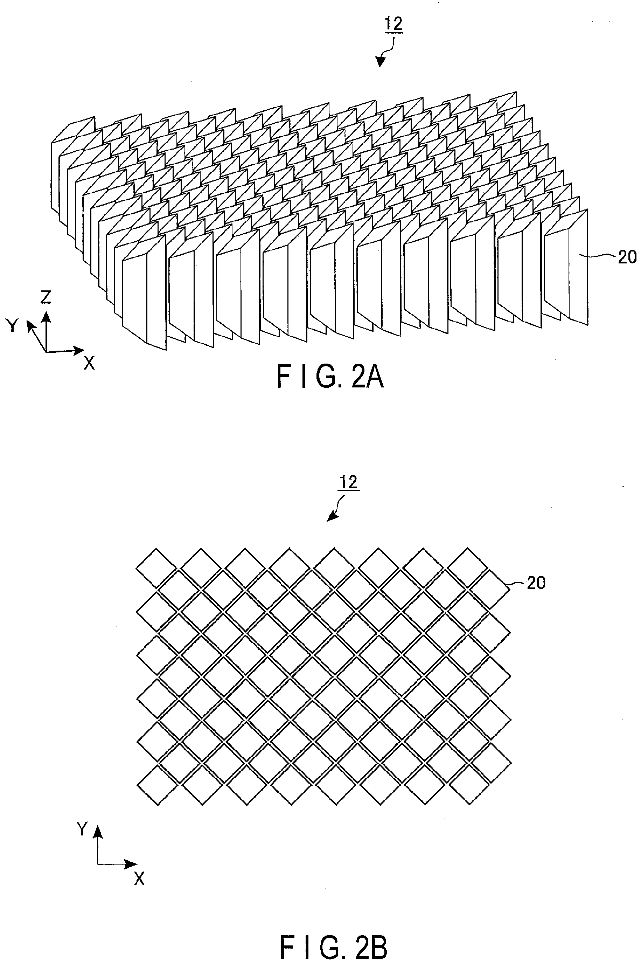

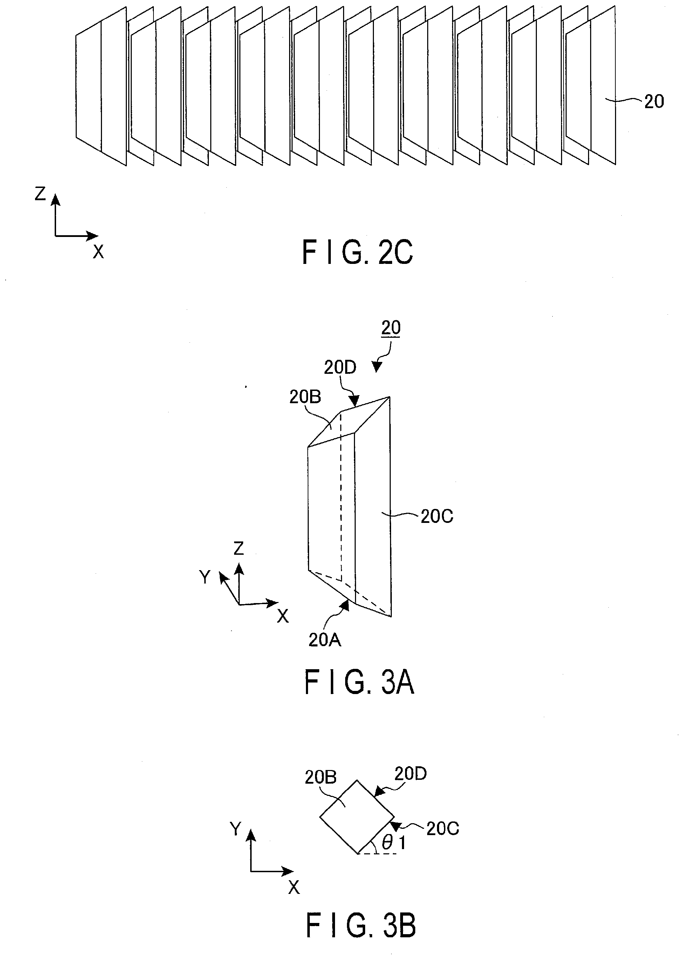

The following is an explanation of a specific structure of the prism device 12. FIG. 2A is a perspective view of the prism device 12. FIG. 2B is a plan view of a region of part of the prism device 12. FIG. 2C is a side view of the prism device 12 as viewed in the Y direction.

The prism device 12 includes a plurality of prism elements 20 arranged in the X direction and the Y direction. The prism elements 20 are arranged at intervals therebetween, and arranged in a zigzag manner. Specifically, the prism elements 20 are arranged such that one line of them extends in a direction of 45° with respect to the X direction and a plurality of lines of them are arranged in a direction of 45° with respect to the Y direction. Each of the prism elements 20 is transparent and formed of, for example, acrylic resin.

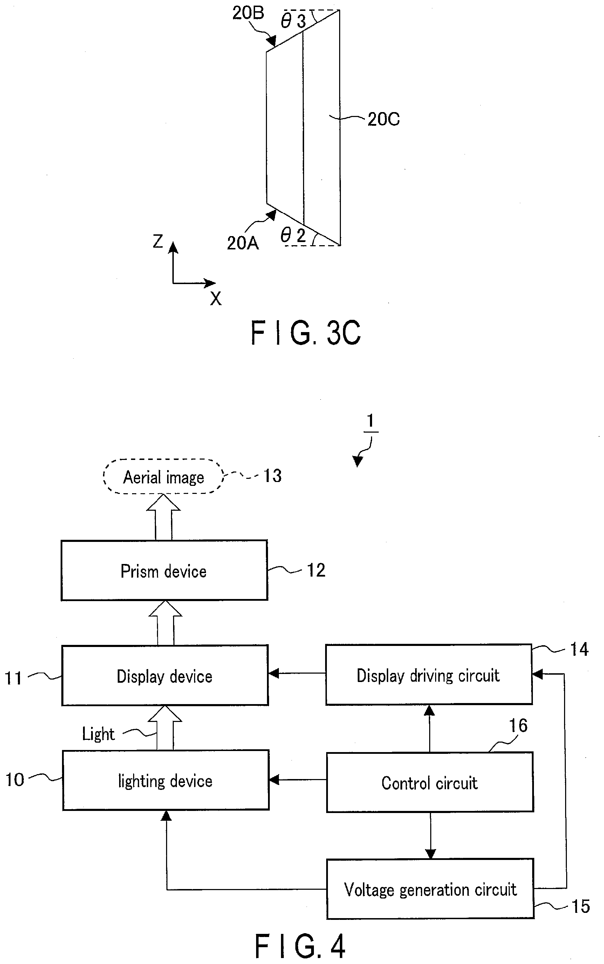

FIG. 3A is a perspective view of one prism element 20. FIG. 3B is a plan view of the prism element 20 as viewed in the XY plane. FIG. 3C is a side view of the prism element 20 as viewed in the XZ plane.

Each prism element 20 is formed of a hexahedron. Each prism element 20 includes two refraction surfaces 20A and 20B and two reflection surfaces 20C and 20D. The refraction surface 20A corresponds to a bottom surface of the hexahedron, the refraction surface 20B corresponds to a top surface of the hexahedron, and the reflection surfaces 20C and 20D correspond to side surfaces of the hexahedron. The reflection surfaces 20C and 20D are parallel with the Z direction (normal direction). The reflection surface 20C and the reflection surface 20D contact with each other and are arranged at an angle of, for example, 90°. As illustrated in FIG. 3B, four side surfaces of the hexahedron are arranged at an angle of, for example, 90°. In plan view, the reflection surface 20C is disposed (inclined) obliquely to have an angle θ1 with respect to the X direction. The angle θ1 is, for example, 45°. In the same manner, in plan view, the reflection surface 20D is disposed obliquely to have an angle θ1 with respect to the Y direction. The angle θ1 is not limited to 45°, but can be set within a range of 30° to 60°.

As illustrated in FIG. 3C, the refraction surface 20A is disposed obliquely to have an angle θ2 with respect to the X direction, and disposed obliquely such that the size of the prism element 20 increases toward a line at which the reflection surface 20C contacts with the reflection surface 20D. The refraction surface 20B is disposed obliquely to have an angle θ3 with respect to the X direction, and disposed obliquely such that the size of the prism element 20 increases toward the line at which the reflection surface 20C contacts with the reflection surface 20D. Each of the angle θ2 and the angle θ3 is, for example, 45°. The angle θ2 and the angle θ3 are set to the same angle. The angle θ2 and the angle θ3 are not limited to 45°, but can be set within a range of 30° to 60°.

Each of the refraction surfaces 20A and 20B has a function of refracting light at the interface. Each of the reflection surfaces 20C and 20D has a function of reflecting light at the interface.

A reflection film may be provided between adjacent prism elements 20, and the adjacent prism elements 20 may contact via the reflection film. In this manner, the prism elements 20 can be fixed as one unitary piece.

As another example, minute projections and depressions may be formed on part of the side surfaces of the prism elements 20, and the adjacent prism elements 20 may partly contact via the projections and depressions. Also in this case, the prism elements 20 can be fixed as one unitary piece.

### <3> Block Configuration of Aerial Display Apparatus 1

FIG. 4 is a block diagram of the aerial display apparatus 1. The aerial display apparatus 1 includes the lighting device 10, the display device 11, the prism device 12, a display driving circuit 14, a voltage generation circuit 15, and a control circuit 16.

The display driving circuit 14 supplies a signal to the display device 11, and drives the display device 11. The display driving circuit 14 causes the display device 11 to display an image and/or a moving image.

The voltage generation circuit 15 generates a plurality of types of voltages required for the lighting device 10 and the display driving circuit 14 to operate, and supplies these voltages to the lighting device 10 and the display driving circuit 14.

The control circuit 16 controls the operation of the entire aerial display apparatus 1. That is, the control circuit 16 controls the lighting device 10, the display driving circuit 14, and the voltage generation circuit 15. The control circuit 16 causes an aerial image 13 to be displayed at a desired display position.

### <4> Operation

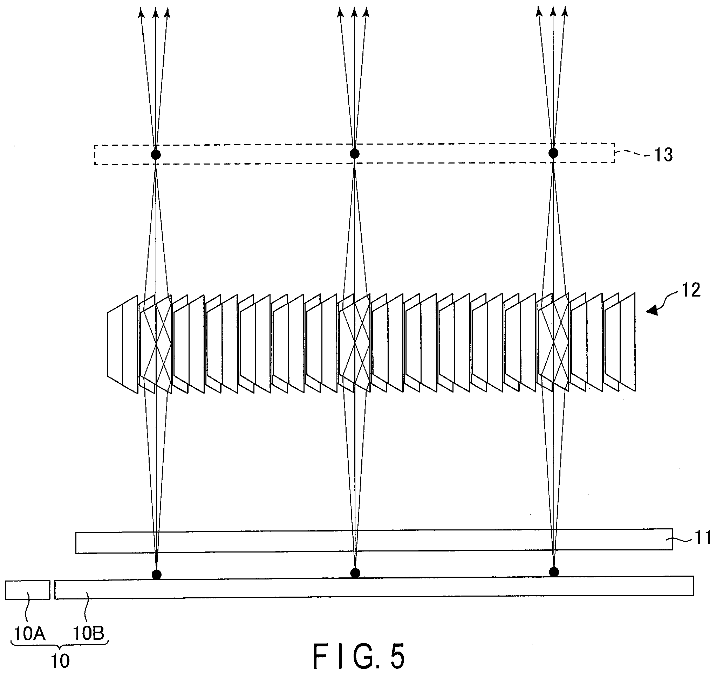

An operation of the aerial display apparatus 1 with the above-described configuration will be described. FIG. 5 is a schematic diagram illustrating an operation of the aerial display apparatus 1.

The lighting device 10 emits illumination light toward the display device 11. The display device 11 transmits the illumination light emitted from the lighting device 10, and displays an image and/or a moving image. The prism device 12 refracts and reflects the display light emitted from the display device 11 to cause an aerial image 13 to be displayed in the aerial space. In FIG. 5, black circles on the lighting device 10 indicate emission positions of the illumination light, and black circles in the aerial image 13 indicate image formation positions of the display light.

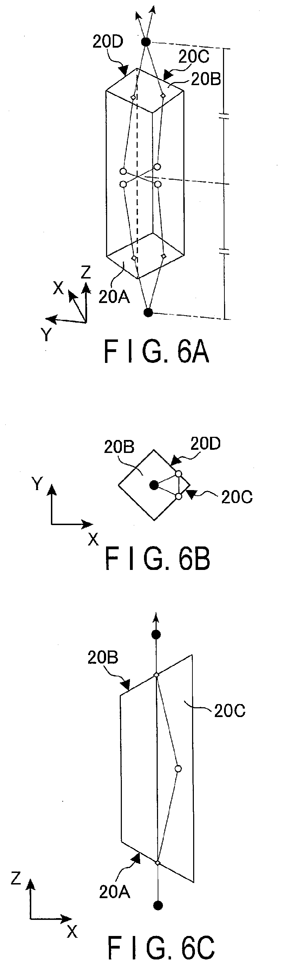

FIG. 6A to FIG. 6C are schematic diagrams illustrating an operation of the prism element 20. FIG. 6A is a perspective view of the prism element 20. FIG. 6B is a plan view of the prism element 20 as viewed in the XY plane. FIG. 6C is a side view of the prism element 20 as viewed in the XZ plane.

Light emitted from the display device 11 is made incident on the refraction surface 20A of the prism element 20 and refracted at the refraction surface 20A. In this operation, the light has a relation "incident angle > refraction angle". Thereafter, the light transmitted through the refraction surface 20A is reflected twice, that is, by the reflection surface 20C and the reflection surface 20D. Thereafter, the light reflected by the reflection surface 20C and the reflection surface 20D is made incident on the refraction surface 20B and refracted at the refraction surface 20B. In this operation, the light has a relation "incident angle < refraction angle". The light transmitted through the refraction surface 20B forms an aerial image 13.

In FIG. 6A to FIG. 6C, a black circle on the lower side indicates a light source, and a black circle on the upper side indicates an image formation position of the light. In FIG. 6A to FIG. 6C, white squares indicate positions at which the light is refracted, and white circles indicate positions at which the light is reflected. The aerial image 13 is formed in a position symmetrical with the light source with respect to the prism element 20.

### <5> Example of Prism Device 12

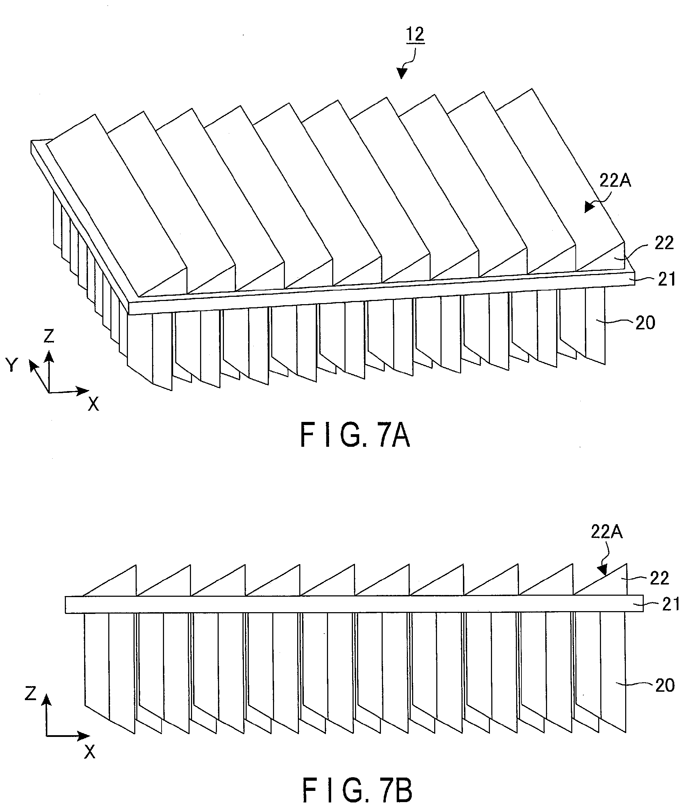

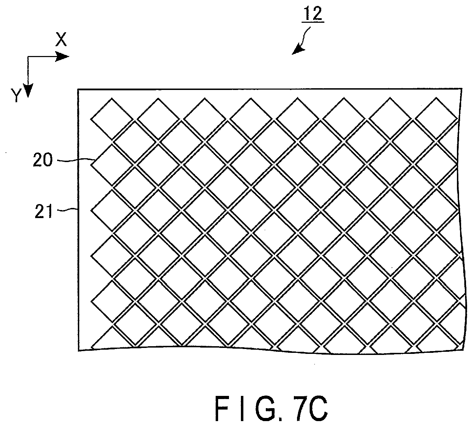

The following is an explanation of an example of the prism device 12. FIG. 7A is a perspective view of the prism device 12 according to a first example. FIG. 7B is a side view of the prism device 12 as viewed in the Y direction according to the first example. FIG. 7C is a bottom view of a region of part of the prism device 12 according to the first example.

The prism device 12 includes a plurality of prism elements 20, a substrate 21, and a plurality of refraction members 22. The prism elements 20, the substrate 21, and the refraction members 22 are transparent and are formed of, for example, acrylic resin.

The substrate 21 is a plate-like member extending in the XY plane. A planar shape of the substrate 21 is a rectangle.

The prism elements 20 are provided on a bottom surface of the substrate 21. Each of the prism elements 20 is formed of a hexahedron. The prism elements 20 have the same structure as the prism elements explained with reference to FIG. 3A to FIG. 3C, except that a top surface of each of them is formed in a horizontal shape. Specifically, each of the prism elements 20 includes a refraction surface 20B and reflection surfaces 20C and 20D described above. The top surface of each of the prism elements 20 contacts with the bottom surface of the substrate 21. Arrangement of the prism elements 20 is the same as that of the prism elements explained with reference to FIG. 2A.

The refraction members 22A are provided on a top surface of the substrate 21. The refraction members 22 are arranged side by side in the X direction. Each of the refraction members 22 is formed of a triangular pole extending in the Y direction. Each of the refraction members 22 includes a refraction surface 22A. The refraction surface 22A is disposed obliquely with respect to the X direction and formed obliquely such that the size of the refraction member 22 increases as it extends in the X direction. The refraction surface 22A is formed obliquely, for example, by 45° with respect to the X direction. The refraction surface 22A of each refraction member 22 has the same function as that of the refraction surface 20B corresponding to the top surface of the prism element 20 described above.

The prism device 12 configured as described above according to the first example can achieve the same operation as that of the prism device explained in the embodiment. The prism device 12 in FIG. 7A may be disposed upside down such that the refraction members 22 are disposed on the bottom side.

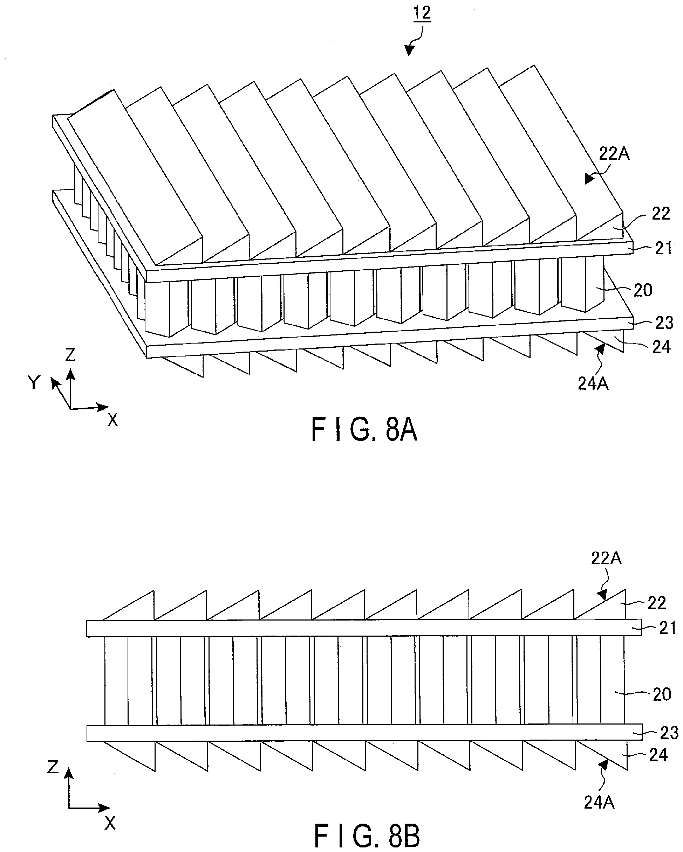

FIG. 8A is a perspective view of the prism device 12 according to a second example. FIG. 8B is a side view of the prism device 12 as viewed in the Y direction according to the second example.

The prism device 12 includes a plurality of prism elements 20, a first substrate 21, a plurality of first refraction members 22, a second substrate 23, and a plurality of second refraction members 24. The prism elements 20, the first substrate 21, the first refraction members 22, the second substrate 23, and the second refraction members 24 are transparent and formed of, for example, acrylic resin. The structures of the first substrate 21 and the first refraction members 22 are the same as those of the first example.

Each of the prism elements 20 is formed of a square pole. Each of the prism elements 20 has a function of reflecting light twice. Each of the prism elements 20 includes reflection surfaces 20C and 20D, in the same manner as the embodiment described above. Arrangement of the prism elements 20 is also the same as that of the prism elements 20 explained with reference to FIG. 2A.

The second substrate 23 is a plate-like member extending in the XY plane. A planar shape of the second substrate 23 is a rectangle. Bottom surfaces of the prism elements 20 contact with a top surface of the second substrate 23.

The second refraction members 24 are provided on a bottom surface of the second substrate 23. The second refraction members 24 are arranged side by side in the X direction. Each of the second refraction members 24 is formed of a triangular pole extending in the Y direction. Each of the second refraction members 24 includes a refraction surface 24A. The refraction surface 24A is disposed obliquely with respect to the X direction and formed obliquely such that the size of the second refraction member 24 increases as it extends in the X direction. The refraction surface 24A is formed obliquely, for example, by 45° with respect to the X direction. The refraction surface 24A of each second refraction member 24 has the same function as that of the refraction surface 20A corresponding to the bottom surface of each of the prism elements 20 described above.

The prism device 12 configured as described above according to the second example can achieve the same operation as that of the prism device explained in the embodiment.

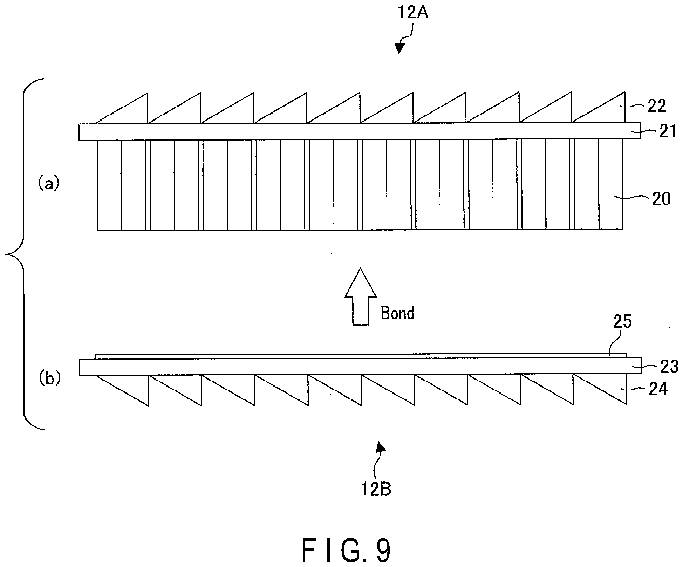

The following is an explanation of an example of a method for manufacturing the prism device 12 according to the second example. FIG. 9 is a diagram illustrating a method for manufacturing the prism device 12 according to the second example.

As illustrated in FIG. 9 (a), a plurality of prism elements 20, a first substrate 21, and a plurality of first refraction members 22 are formed as one unitary piece to form a first optical device 12A. Thereafter, as illustrated in FIG. 9 (b), a second substrate 23 and a plurality of second refraction members 24 are formed as one unitary piece to form a second optical device 12B.

Thereafter, a transparent adhesive 25 is applied onto the top surface of the second substrate 23. Thereafter, the first optical device 12A and the second optical device 12B are bonded to each other via the adhesive 25. In this manner, the prism device 12 illustrated in FIG. 8B is formed.

### <6> Effects of Embodiment

As described in detail above, according to the embodiment, the aerial display apparatus 1 includes the lighting device 10, the display device 11, and the prism device 12. The lighting device 10, the display device 11, and the prism device 12 are arranged in this order along the normal direction and arranged such that their principal surfaces are parallel. The lighting device 10 and the display device 11 cause display light to be made incident on the prism device 12 in the normal direction. The prism device 12 refracts and reflects the display light from the display device 11 and to cause an image and/or a moving image to be displayed in the aerial space on a side opposite to the display device 11.

With this structure, the embodiment removes the necessity for disposing the lighting device 10 and the display device 11 obliquely with respect to the prism device 12. This structure achieves the aerial display apparatus 1 enabling downsizing in the normal direction while maintaining the display quality of an aerial image. This structure also achieves the aerial display apparatus 1 enabling downsizing also in the horizontal direction.

The embodiment described above illustrates a liquid crystal display device as an example of the display device, but the display device may be a display device other than a liquid crystal display device, such as an organic electroluminescence (EL) display device of a spontaneous light emitting type. In the case of using an organic EL display device, the lighting device 10 is omitted.

The present invention is not limited to the above-described embodiment, but can be modified in various manners in practice, without departing from the gist of the invention. Moreover, the embodiment can be suitably combined; in that case, combined advantages are obtained. Furthermore, the above-described embodiment includes various inventions, and various inventions can be extracted from a combination selected from structural elements disclosed herein. For example, if the problem can be solved and the effects can be attained even after some of the structural elements are deleted from all the structural elements disclosed in the embodiment, the structure made up of the resultant structural elements may be extracted as an invention.

## Claims

1. An aerial display apparatus comprising:
a display device displaying an image; and
a prism device reflecting light from the display device and causing an image to be displayed in an aerial space on a side opposite to the display device, wherein
the prism device includes a plurality of prism elements arranged in a horizontal plane,
each of the prism elements is formed of a hexahedron and includes a first and a second refraction surfaces refracting light and a first and a second reflection surfaces reflecting light,
the first refraction surface corresponds to a bottom surface of the hexahedron and is inclined with respect to a first direction parallel with the horizontal plane,
the second refraction surface corresponds to a top surface of the hexahedron and is inclined with respect to the first direction,
the first reflection surface corresponds to a side surface of the hexahedron and is parallel with a normal direction, and
the second reflection surface corresponds to another side surface of the hexahedron, contacts with the first reflection surface, and is parallel with the normal direction.

2. The aerial display apparatus according to claim 1, wherein
the first refraction surface is inclined by 45° with respect to the first direction, and
the second refraction surface is inclined by 45° with respect to the first direction.

3. The aerial display apparatus according to claim 1, wherein
in plan view, the first reflection surface is inclined with respect to the first direction, and
in plan view, the second reflection surface is inclined with respect to the first direction.

4. The aerial display apparatus according to claim 3, wherein
the first reflection surface is inclined by 45° with respect to the first direction, and
the second reflection surface is inclined by 45° with respect to the first direction.

5. The aerial display apparatus according to claim 1, wherein the first reflection surface and the second reflection surface are arranged to be orthogonal to each other.

6. The aerial display apparatus according to claim 1, wherein the prism device is formed of a transparent material.

7. The aerial display apparatus according to claim 1, further comprising:
a lighting device emitting light, wherein
the display device is a liquid crystal display device and transmits light from the lighting device.

8. An aerial display apparatus comprising:
a display device displaying an image; and
a prism device reflecting light from the display device and causing an image to be displayed in an aerial space on a side opposite to the display device, wherein
the prism device includes:
a substrate;
a plurality of prism elements provided on a bottom surface of the substrate and arranged in a horizontal plane; and
a plurality of refraction members provided on a top surface of the substrate and refracting light,
each of the prism elements is formed of a hexahedron and includes a refraction surface refracting light and a first and a second reflection surfaces reflecting light,
the refraction surface corresponds to a bottom surface of the hexahedron and is inclined with respect to a first direction parallel with the horizontal plane,
the first reflection surface corresponds to a side surface of the hexahedron and is parallel with a normal direction,
the second reflection surface corresponds to another side surface of the hexahedron, contacts with the first reflection surface, and is parallel with the normal direction, and
the refraction members are arranged side by side in the first direction, each of the refraction members extends in a second direction orthogonal to the first direction in the horizontal plane, and each of the refraction members is formed of a triangular pole.

9. The aerial display apparatus according to claim 8, wherein the refraction surface is inclined by 45° with respect to the first direction.

10. The aerial display apparatus according to claim 8, wherein each of the refraction members includes a . refraction surface inclined by 45° with respect to the first direction.

11. The aerial display apparatus according to claim 8, wherein
in plan view, the first reflection surface is inclined with respect to the first direction, and
in plan view, the second reflection surface is inclined with respect to the first direction.

12. The aerial display apparatus according to claim 11, wherein
the first reflection surface is inclined by 45° with respect to the first direction, and
the second reflection surface is inclined by 45° with respect to the first direction.

13. The aerial display apparatus according to claim 8, wherein the first reflection surface and the second reflection surface are arranged to be orthogonal to each other.

14. The aerial display apparatus according to claim 8, wherein the prism device is formed of a transparent material.

15. The aerial display apparatus according to claim 8, further comprising:
a lighting device emitting light, wherein
the display device is a liquid crystal display device and transmits light from the lighting device.
